# EUROPEAN PATENT SPECIFICATION

(11) **EP 2 642 624 B1**
(45) Date of publication and mention of the grant of the patent: **28.01.2015**
(21) Application number: 12160882.2
(22) Date of filing: 22.03.2012
(51) Int. Cl.: H02G 3/22, H02G 15/013

(54) **Compressed over-molded seal for insulated cables**
Komprimiertes überspritztes Siegel für isolierte Kabel
Joint d'étanchéité surmoulé comprimé pour câbles isolés

(43) Date of publication of application: 25.09.2013
(73) Proprietor: Tyco Electronics Belgium EC BVBA, 8020 Oostkamp (BE)
(72) Inventor: Ocket, Tom, 8820 Torhout (BE); De Boever, Geert, 8810 Lichtervelde (BE); Devos, Peter, 9032 Wondelgem (BE); De Brauwer, Hans, 8340 Damme (BE); Van Cauwenberge, Jan, 9880 Aalter (BE)
(74) Representative: Grünecker, Kinkeldey, Stockmair & Schwanhäusser

(56) References cited:
- DE-A1-102009 048 877
- FR-A1- 2 680 055
- US-B1- 8 136 279

## Description

The present invention relates to a sealing assembly for sealing up between an electrical line and a surrounding area, the sealing assembly comprising a sealing compound at least partially surrounding a section of the line, wherein a gasket circumferentially enclosing the section of the electrical line to be sealed up against a surrounding area is arranged between the said section and the sealing compound.

Further, the invention relates to a gasket for a sealing assembly, wherein at least one annular sealing lip extends along an inner circumference of the gasket.

Moreover, the invention relates to an electrical component comprising a sealed-up interior space and an electrical line extending from a surrounding area into the interior space.

Finally, the invention relates to a method for sealing up between an electrical line and a surrounding area, wherein the line is over-molded with a sealing compound, wherein a gasket is placed around the line before molding.

Sealing assemblies, electrical components comprising a sealed-up interior space, and methods for sealing up between an electrical line and a surrounding area as mentioned above are known from the prior art. According to the prior art, the known sealing assemblies, sealed-up electrical components and methods for sealing up include e.g. potting and low pressure molding (LPM) processes.

Potting is a method, wherein an electronic assembly is filled with a sealing compound. Therefore, the sealing compound is e.g. poured into a housing of the electronic assembly. As a sealing compound, e.g. epoxy resins or thermosetting plastics, such as Duroplast, may be used. Low pressure molding is a process, wherein a thermoplastic is heated and then injected into and/or poured over electronic components. As a thermoplastic, e.g. polyamide may be used.

Both potting and low pressure molding serve for protecting electronic devices and components against detrimental environmental impacts, such as any harmful liquids, gases, moisture, dirt, dust, shock and/or vibration. After curing or setting of the respective sealing compound, the electronic components are supposed to be hermetically sealed up. Especially fragile electronic parts or connections should be fixed by the molding, such that they are immobilized with respect to any surrounding housings or terminals, thereby inhibiting any damage of these parts or connections due to physical impacts.

FR 2,680,055 A1 describes a sealing assembly according to the preamble of claims 1, 5 and 11 comprising a cable gland reaching through a through-hole within a wall of an enclosure for electric equipment. A gasket is received within the gland. A sealing compound is molded over a section of the gasket protruding from the gland as well as a section of a cable which is fed through the gland.

DE 10 2009 048 877 A1 describes a sealed feed through for enclosures of electronic equipment, comprising an annular sealing arranged in a through-hole of an inner housing and encompassing a cable. A strain relief element is molded over a section of the cable protruding from the inner housing, such that it is integrally connected to the sealing.

US 8,136,279 B1 describes a sealing element molded around an opening of a housing provided with grooves and cavities in order to enlarge a bonding surface as well as to provide a positive-fit and frictional engagement between the sealing element and the housing.

However, tests carried out by the applicant have shown that the assemblies and methods according to the prior art mentioned above do not always guarantee a sufficient protection of the electronic components against harmful liquids and physical impacts. Especially, known over-molding processes do not always provide sufficient watertightness.

In view of these disadvantages, it is an object of the present invention to provide means for an over-molding of electrical components and electrical lines protruding therefrom in order to satisfyingly seal up these components against external substances (liquid or gas) as well as to protect them from physical impacts, such as shock and vibration.

For the sealing assembly mentioned in the beginning of this description, the object underlying the invention is solved in that a front-end face of the gasket is aligned with a surface of the sealing compound in an axial direction of the line.

Accordingly, in the above-mentioned electrical component, the object is solved in that the electrical component comprises at least one sealing assembly according to the invention with a gasket for sealing up an inlet opening or passage through which the electrical line enters the interior space from the surrounding area.

For the gasket mentioned in the beginning of the description, the object is solved in that an inner circumference of a front-end opening of the gasket is provided with a bevel.

For the method mentioned in the beginning of this description, the object is solved in that a front-end face of the gasket is being aligned with a surface of the sealing compound in an axial direction of the line.

The above-mentioned inventive solutions provide that the electrical line, e.g. an insulated cable, and especially the inlet for the line within the electronic component, is sufficiently sealed because the inner circumference of the gasket snugly encloses the cable and, at the same time, the outer circumference of the gasket is enclosed by the sealing compound. The gasket thereby helps to even out any tolerances regarding the outer diameter of the electrical line with respect to the inlet formed by the cured sealing compound as well as to tolerate movements of the electrical line with respect to the other parts of the component and the sealing compound during and after molding, i.e. during the curing process of the sealing compound and operation of the electrical component.

The at least one sealing lip may facilitate a compression of the gasket due to chambers formed around the sealing lip. Moreover, the at least one sealing lip may facilitate a snug fit of the gasket around the outer circumference of the electrical line, since the sealing lip may be more easily deformed than a plane inner circumference of the gasket, since the sealing lip may provide a relatively small surface, which may easily elastically adapt itself to the outer circumference of the electrical line.

Further, the solutions according to the present invention provide that the outer dimensions of the electrical line as well as the over-molding plastic or sealing compound do not have to be compliant with each other to provide a seal. Also, no other means, like gluing or impregnating are necessary. The solutions according to the present invention are suitable for all applications in which an over-molded electrical line or cable has to be sealed against external substances and impacts, as mentioned above.

The above-mentioned solutions according to the present invention may be combined in any way with any one of the following advantageous embodiments of the present invention respectively and thus further improved.

According to a first improvement, the sealing compound may compress the gasket, which is thereby urged radially towards the line. Therefore, the gasket may provide an air-chamber between itself and the electrical line in order to be compressed by the sealing compound and/or the over-mold pressure. This compression force may result in a reaction force from the gasket after over-molding. The reaction force provides a watertight sealing between both electrical line and gasket as well as between gasket and sealing compound.

According to a further improvement, the sealing compound may directly enclose the gasket as well as the line. Thereby, the gasket and the line are non-relocatably fixed with respect to each other. Thus, especially the resistance of the sealing assembly against physical impacts, such as tensile forces acting upon the electrical line, is improved.

The surface of the sealing compound may especially be an outer surface exposed to the surrounding area. In other words, at least one side of the gasket may be arranged in alignment with or located on the surface of the over-mold formed by the sealing compound. This helps in protecting the electrical line, especially an insulation of an electrical cable, against the sealing compound, e.g. over-mold plastic, during and after over-molding. Alternatively, the sealing compound may also completely cover the gasket or the gasket may protrude out of the sealing compound. The gasket may be made of a softer material than the sealing compound and may thereby protect the electrical line from damage due to handling and movement.

Cavities between the gasket and the line may be filled with air and/or a filling compound. Especially when filled with air, the formed air-chambers may facilitate a compression of the gasket towards the electrical line by the over-mold pressure, thereby enhancing the reaction force of the gasket providing a sufficient watertightness between itself and both the sealing compound as well as the electrical line. The filling or further sealing compound may be e.g. the sealing compound itself or another liquid which may stay viscose or may cure in order to provide a water- and gastight sealing up of the outer circumference of the electrical line.

A groove may extend along an outer circumference of the gasket. Alternatively, a rib may be formed at the outer circumference of the gasket. The groove and/or may extend around the outer circumference of the gasket in an annular manner. Equipping the gasket with grooves and/or ribs may enhance the watertightness and fixation of the gasket within the sealing compound.

The groove and/or the rib may be formed essentially at the same level as the sealing lip in an axial direction of the gasket. Especially the groove may then enhance the compressibility and elasticity of the gasket, which may therefore be more easily compressed towards the electrical line.

The bevel may extend around the front-end opening in an annular manner. Thereby, the electrical line protruding from the gasket may be provided with a certain degree of moveability, e.g. such that it may more easily bend around the front-end opening. This may especially help in protecting an insulation of the electrical line, e.g. the insulation of an electrical cable against indentation or wear and also may reduce friction between the electrical line and the gasket at the front-end opening.

A rear-end opening of the gasket may be designed as a sealing collar with a rear-end face, which leads to an annular sealing edge. This enables a snug fit of the rear-end opening around the outer circumference of the electrical line. The sealing edge may enclose the outer circumference of the electrical line in order to prevent the sealing compound from entering into a space between the gasket and the electrical line during the molding procedure. Thereby, any chambers between the gasket and the line may be sealed-up towards the rear-end of the gasket. The sealing collar may thereby serve as a sealing lip.

A tight fit of the sealing collar around the electrical line may be improved in that a rear diameter of the rear-end opening at the sealing edge is smaller or at the most equal to a diameter of the inner circumference of the gasket at the least one sealing lip. In other words, the rear-end opening may at the sealing collar provide the smallest inner diameter of the gasket either with or without at least one more sealing lip formed between the rear-end and the front-end opening of the gasket.

The gasket may comprise at least one further sealing lip. In other words, in addition to the sealing collar at the rear-end or a further sealing collar at the front-end, the gasket may be provided with at least one sealing lip there between. Hence, even if one sealing lip or sealing collar fails to sufficiently seal up against harmful substances, the next sealing lip in the way of a substance entering the gasket at the front-end opening may provide a sufficient sealing.

A rear-end edge of the gasket leading into a outer circumference of the gasket may be radiused. In other words, the edges between the outer circumference of the gasket and its rear face may be rounded. Thereby, the sealing compound may easily flow around the gasket and the formation of any cavities within the sealing compound around and especially behind the gasket is prevented.

The inventive method may be further improved in that an air chamber between the gasket and the line is compressed during molding. Hence, the processing time of the over-molding step should not exceed a processing time of the over-molding processes according to the prior art. The gasket and the line may each at least in sections be over-molded essentially simultaneously. This helps in precisely immobilizing the gasket with respect to the line as well as the inventive sealing assembly with respect to an electronic compound or device wherein it is applied.

In a pre-assembled state, the gasket may be arranged loosely and relocatably around the line. After molding, in a final or fixed state, the gasket may be pressed towards the line due to a force exerted by the sealing compound. Preferably prominent parts of the gasket, such as sealing lips or collars may be pressed towards the line during cooling down or curing of the sealing compound and/or due to the over-molding pressure.

The invention will be described in more detail by way of example hereinafter with reference to the accompanying drawing which illustrates advantageous embodiments. The described embodiments are only possible configurations in which the individual features may, however, as described above, be implemented independently of each other or be omitted. Corresponding elements illustrated in the drawing are provided with the same reference signs.

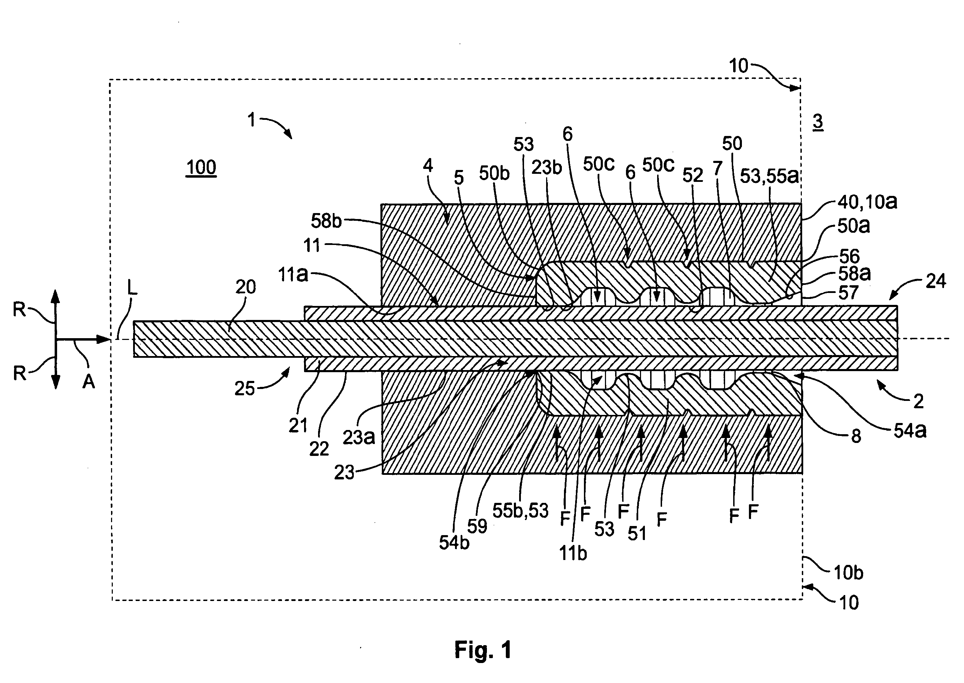

Fig. 1, the only drawing, is a schematic cross-sectional side view of a sealing assembly according to an embodiment of the present invention. The sealing assembly 1 comprises an electrical line 2, at least partially extending through a surrounding area 3, a sealing compound 4 and a gasket 5.

The electrical line 2 may be a cable, wire or a solid strand and may comprise one or more electrical conductors 20 in the form of strands or braided wires as well as shieldings. The electrical conductor may be circumferentially surrounded by an isolation 21. The electrical conductor 20 or the isolation 21 may form an outer circumference 22 of the electrical line 2. The electrical line 2 may preferably extend straightly through the sealing assembly 1 from the surrounding area 3 across an envelope boundary 10 defined by the sealing assembly 1 between the surrounding area 3 and an interior space 100. The interior space 100 may be the interior of an electrical compound (not shown).

The electrical conductor 20 may be flexible or rigid. In each case, the electrical conductor defines an axial direction A of the sealing assembly 1 and its elements. The axial direction A extends essentially in parallel to the longitudinal axis L. Further, the electrical conductor 20 defines a radial direction R essentially extending perpendicularly with respect to and radially around the longitudinal axis L.

A section 23 of the electrical conductor 20 is surrounded by a passage or inlet opening 11 formed by the sealing assembly 1. An outside section 24 of the electrical conductor 2 extends through the surrounding area 3 outside the envelope boundary 10. An inside section 25 of the electrical line 2 may extend inside the envelope boundary 10 within the interior space 100.

The surrounding area 3 may be any environment or outside area, i.e. outside the envelope boundary 10 and interior space 100, wherein the electrical line 2 may be exposed to detrimental environmental impacts as mentioned in the beginning of the description.

The sealing compound 4 is molded over the electrical line 2 and the gasket 5 and may be a hot mold or any other thermoplastically or otherwise curing and/or setting substance. In enclosing a first part 23a of the section 23 of the electrical line 2, the sealing compound 4 forms an inner portion 11 a of the passage 11 directly enclosing the outer circumference 22 of the electrical line 2. A second part 23b of the section 23 of the electrical line 2 is surrounded by the gasket 5. Towards the surrounding area 3, an outer surface 40 of the sealing compound 4 may form a first part 10a, of the envelope boundary 10.

The gasket 5 has an outer circumference 50 which is enclosed by the sealing compound 4. The sealing compound 4 exerts a compression force F against the radial direction R onto the outer circumference 50 of the gasket 5. Thereby, a wall 51 at least partially forming the outer circumference 50 of the gasket 5 is pushed towards the electrical line 2. Consequently, an inner circumference 52 of the gasket 5 is urged towards the electrical line 2. The inner circumference 52 of the gasket 5 may before and after molding be contacting, preferably enclosing, the outer circumference 22 of the electrical line 2. The gasket may be formed of silicone, rubber and/or any compositions comprising silicone and/or rubber.

Within one or more chambers or cavities 6 formed between the inner circumference 52 of the gasket 5 and the outer circumference 22 of the electrical line 2, a further sealing compound 7 may be applied. The further sealing compound 7 may enhance sealing up the electrical line 2 and the interior space 100 with respect to the surrounding area 3. The further sealing compound 7 may form a border 8 within the passage 11 towards the surrounding area 3 and thereby serve as a form of plug for sealing up. Hence, the further sealing compound 7 serves as a filling compound.

Along the inner circumference 52 of the gasket 5, one or more sealing lips 53 distanced from each other along the axial direction A may be arranged. The sealing lips 53 are supposed to encompass and directly enclosed the outer circumference 22 of the electrical line 2. Next to a front-end opening 54a of the gasket 5, the sealing lip 53 may be formed as an outer sealing collar 55a, which may be thicker, especially in the axial direction A, than the inner sealing lip 53.

The outer sealing collar 55a may merge with a bevel 56 formed around the front-end opening 54a. The bevel 56 may be designed such that it preferably annularly surrounds the front-end opening 54a such that the outer circumference 22 of the outside section 24 of the electrical line 2 has a certain degree of freedom of moveability. Hence, an outer edge 57 of the gasket 5 between the opening 54 and a front-end face 58a is circumferentially slightly distanced from the other circumference 22 of the electrical line 2.

An inner sealing collar 55b of the gasket 5 may be formed around a rear end opening 54b of the gasket 5. The inner sealing collar 55b may be formed such that a sealing edge 59 is provided between a part of the inner circumference 53 of the gasket 5 defined by the inner sealing collar 55b and a rear-end face 58b of the gasket 5.

Further, the gasket 5 and preferably the wall 51 of the gasket 5 may be formed such that between the rear end face 58b and the outer circumference 50 of the gasket 5, an edge rounding is provided. In other words, in contrast to a front edge 50a between the front-end face 58a and the outer circumference 50 of the gasket 5, a rear edge 50b between the outer circumference 50 and the rear-end face 58b of the gasket may be radiused. Additionally, one or more annular grooves 50c may be formed along the outer circumference 50 of the gasket.

Deviations from the above-described embodiments are possible within the inventive idea. The sealing assembly 1, the electrical line 2, the sealing compound 4 and the gasket 5 may be formed as desired for providing a sufficient sealing. Therefore, one or more of the chambers 6 may be formed as desired, e.g. radially around the longitudinal axis L and filled with further sealing compounds 7. These may form borders 8 towards a front-end opening 54a of the gasket 5. The border 8 may be distanced from the outer edge 57 of the opening, such that it lies within the passage 11 as shown herein order to enable a moveability of the outside section 24 of the electrical line 2 in the vicinity of the front-end opening 54a. Alternatively, the passage 11 may be filled up partially or in its entirety by the filling compound 7, such that the filling compound protrudes above the front-end face 58a of the gasket 5 and forms a bulge (not shown) enclosing the electrical conductor circumferentially for an improved sealing and stabilization.

The envelope boundary 10 with its first part 10a and second part 10b may be formed as afforded by the respect application of the sealing assembly 1 or as defined by an electrical component. Hence, the interior space 100 and the passage 11 leading into that interior space 100 may also be formed and dimensioned as required by outer dimensions of the electrical line 2.

The electrical line 2 may comprise one or more electrical conductors 20, isolations 21, outer circumferences 22, sections 23 with first parts 23a and second parts 23b, outside sections 24 and inside sections 25 as required by the respective application.

The outer surface 40 of the sealing compound 4 may be plane as shown therein or may be provided with any desired shape required by the respective application.

The gasket 5 with its outer circumference 50, front and rear edges 50a, 50b, grooves 50c, walls 51, inner circumferences 52, sealing lips 53, front-end openings 54a, rear-end openings 54b, outer sealing collars 55a, inner sealing collars 55b, bevels 56, outer edges 57 of the openings 54a, 54b, front-end and rear-end faces 58a, 58b and sealing edges 59 may be formed and shaped as desired for providing or at least partially form one or more passages 11 in order to accommodate and seal up one or more electrical lines 2 as desired and required by the respective application. The passages 11 within the gasket 5 may be provided in any number and form desired to each accommodate an electrical line 2, wherein the passages 11 may have differing shapes in order to accommodate different electrical lines 2.

## Claims

1. Sealing assembly (1) for sealing up between an electrical line (2) and a surrounding area (3), the sealing assembly (1) comprising a sealing compound (4) at least partially surrounding a section (23) of the line (2), wherein a gasket (5) circumferentially enclosing the section (23) is arranged between the section (23) and the sealing compound (4), **characterized in that** a front-end face (58a) of the gasket (5) is aligned with a surface (40) of the sealing compound (4) in an axial direction (A) of the line (2).

2. Sealing assembly (1) according to claim 1, **characterized in that** the sealing compound (4) compresses the gasket (5) which is thereby urged radially towards the line (2).

3. Sealing assembly (1) according to claim 1 or 2, **characterized in that** the sealing compound (4) directly encloses the gasket (5) as well as the line (2).

4. Sealing assembly (1) according to one of claims 1 to 3, **characterized in that** at least one chamber (6) between the gasket (5) and the line (2) is filled with air and/or a filling compound (7).

5. Gasket (5) for a sealing assembly (1) according to one of claims 1 to 4 above, wherein at least one annular sealing lip (53, 55a, 55b) extends along an inner circumference (52) of the gasket (5), **characterized in that** the inner circumference of a front-end opening (54a) of the gasket (5) is provided with a bevel (56).

6. Gasket (5) according to claim 5, **characterized in that** a groove (50c) extending along an outer circumference (50) of the gasket (5) is formed essentially at the same level as the at least one sealing lip (53, 55a, 55b) in an axial direction (A) of the gasket (5).

7. Gasket (5) according to one of claims 5 or 6, **characterized in that** a rear-end opening (54b) of the gasket (5) is designed as a sealing collar (55b) with a rear-end face (58b) which leads into an annular sealing edge (59), wherein a rear diameter of the rear-end opening (54b) at the sealing edge (59) is smaller than or at the most equal to a diameter of the inner circumference (52) of the gasket (5) at the at least one sealing lip (53, 55a).

8. Gasket (5) according to one of claims 5 to 7, **characterized in that** it comprises at least one further sealing lip (53, 55a, 55b).

9. Gasket (5) according to one of claims 5 to 8, **characterized in that** a rear-end edge (50b) of the gasket (5) leading into an outer circumference (50) of the gasket (5) is radiused.

10. Electrical component comprising a sealed-up interior space (100) and an electrical line (2) extending from a surrounding area (3) into the interior space (100), **characterized in that** the electrical component comprises at least one sealing assembly (1) with a gasket (5) according to one of claims 5 to 9 for sealing up a passage (11) through which the line (2) enters the interior space (100) from the surrounding area (3).

11. Method for sealing up between an electrical line (2) and a surrounding area (3), wherein the line (2) is over-molded with a sealing compound (4), wherein a gasket (5) is placed around the line (2) before molding, **characterized in that** a front-end face (58a) of the gasket (5) is being aligned with a surface (40) of the sealing compound (4) in an axial direction (A) of the line (2).

12. Method according to claim 11, **characterized in that** a chamber (6) between the gasket (5) and the line (2) is compressed during molding.

13. Method according to claim 11 or 12, **characterized in that** the gasket (5) and the line (2) are each at least in sections over-molded essentially simultaneously.

## Patentansprüche

1. Abdichtungsbaugruppe (1) zum Abdichten zwischen einer elektrischen Leitung (2) und einem umgebenden Bereich (3), wobei die Abdichtungsbaugruppe (1) eine Dichtungsmasse (4) umfasst, die wenigstens teilweise eine Sektion (23) der Leitung (2) umschließt, wobei eine Dichtung (5), welche die Sektion (23) in Umfangsrichtung umschließt, zwischen der Sektion (23) und der Dichtungsmasse (4) angeordnet ist, **dadurch gekennzeichnet, dass** eine Vorderendfläche (58a) der Dichtung (5) in einer Axialrichtung (A) der Leitung (2) mit einer Oberfläche (40) der Dichtungsmasse (4) ausgerichtet ist.

2. Abdichtungsbaugruppe (1) nach Anspruch 1, **dadurch gekennzeichnet, dass** die Dichtungsmasse (4) die Dichtung (5) zusammendrückt, die dadurch in Radialrichtung zu der Leitung (2) hin gedrängt wird.

3. Abdichtungsbaugruppe (1) nach Anspruch 1 oder 2, **dadurch gekennzeichnet, dass** die Dichtungsmasse (4) sowohl die Dichtung (5) als auch die Leitung (2) unmittelbar umschließt.

4. Abdichtungsbaugruppe (1) nach einem der Ansprüche 1 bis 3, **dadurch gekennzeichnet, dass** wenigstens eine Kammer (6) zwischen der Dichtung (5) und der Leitung (2) mit Luft und/oder einer Füllmasse (7) gefüllt ist.

5. Dichtung (5) für eine Abdichtungsbaugruppe (1) nach einem der obigen Ansprüche 1 bis 4, wobei sich wenigstens eine ringförmige Abdichtungslippe (53, 55a, 55b) entlang eines Innenumfangs (52) der Dichtung (5) erstreckt, **dadurch gekennzeichnet, dass** der Innenumfang einer Vorderendöffnung (54a) der Dichtung (5) mit einer Abschrägung (56) versehen ist.

6. Dichtung (5) nach Anspruch 5, **dadurch gekennzeichnet, dass** eine Rille (50c), die sich entlang eines Außenumfangs (50) der Dichtung (5) erstreckt, im Wesentlichen auf dem gleichen Niveau wie die wenigstens eine Abdichtungslippe (53, 55a, 55b) in einer Axialrichtung (A) der Dichtung (5) geformt ist.

7. Dichtung (5) nach Anspruch 5 oder 6, **dadurch gekennzeichnet, dass** eine Hinterendöffnung (54b) der Dichtung (5) als ein Abdichtungsbund (55b) mit einer Hinterendfläche (58b), die in eine ringförmige Abdichtungskante (59) führt, gestaltet ist, wobei ein hinterer Durchmesser der Hinterendöffnung (54b) an der Abdichtungskante (59) kleiner als ein Durchmesser des Innenumfangs (52) der Dichtung (5) an der wenigstens einen Abdichtungslippe (53, 55a) ober höchsten gleich demselben ist.

8. Dichtung (5) nach einem der Ansprüche 5 bis 7, **dadurch gekennzeichnet, dass** sie wenigstens eine weitere Abdichtungslippe (53, 55a, 55b) umfasst.

9. Dichtung (5) nach einem der Ansprüche 5 bis 8, **dadurch gekennzeichnet, dass** eine Hinterendkante (50b) der Dichtung (5), die in einem Außenumfang (50) der Dichtung (5) führt, abgerundet ist.

10. Elektrisches Bauteil, das einen abgedichteten Innenraum (100) und eine elektrische Leitung (2), die sich von einem umgebenden Bereich (3) in den Innenraum (100) erstreckt, umfasst, **dadurch gekennzeichnet, dass** das elektrische Bauteil wenigstens eine Dichtungsbaugruppe (1) mit einer Dichtung (5) nach einem der Ansprüche 5 bis 9 umfasst, um einen Durchgang (11) abzudichten, durch den die Leitung (2) aus dem umgebenden Bereich (3) in den Innenraum (100) eintritt.

11. Verfahren zum Abdichten zwischen einer elektrischen Leitung (2) und einem umgebenden Bereich (3), wobei die Leitung (2) mit einer Dichtungsmasse (4) überformt wird, wobei vor dem Formen eine Dichtung (5) um die Leitung (2) angeordnet wird, **dadurch gekennzeichnet, dass** eine Vorderseitenfläche (58a) der Dichtung (5) in einer Axialrichtung (A) der Leitung (2) mit einer Oberfläche (40) der Dichtungsmasse (4) ausgerichtet ist.

12. Verfahren nach Anspruch 11, **dadurch gekennzeichnet, dass** eine Kammer (6) zwischen der Dichtung (5) und der Leitung (2) während des Formens zusammengedrückt wird.

13. Verfahren nach Anspruch 11 oder 12, **dadurch gekennzeichnet, dass** die Dichtung (5) und die Leitung (2) jeweils wenigstens in Sektionen im Wesentlichen gleichzeitig überformt werden.

## Revendications

1. Ensemble de joint d'étanchéité (1) assurant l'étanchéité entre une ligne électrique (2) et une zone environnante (3), l'ensemble de joint d'étanchéité (1) comprenant un composé d'étanchéité (4) entourant au moins partiellement une section (23) de la ligne (2), dans lequel une garniture d'étanchéité (5) enveloppant circonférentiellement la section (23) est agencée entre la section (23) et le composé d'étanchéité (4), **caractérisé en ce qu'**une face d'extrémité avant (58a) de la garniture d'étanchéité (5) est alignée avec une surface (40) du composé d'étanchéité (4) dans un sens axial (A) de la ligne (2).

2. Ensemble de joint d'étanchéité (1) selon la revendication 1, **caractérisé en ce que** le composé d'étanchéité (4) comprime la garniture d'étanchéité (5) qui est ainsi sollicitée radialement vers la ligne (2).

3. Ensemble de joint d'étanchéité (1) selon la revendication 1 ou 2, **caractérisé en ce que** le composé d'étanchéité (4) enveloppe directement la garniture d'étanchéité (5) ainsi que la ligne (2).

4. Ensemble de joint d'étanchéité (1) selon l'une quelconque des revendications 1 à 3, **caractérisé en ce qu'**au moins une chambre (6) située entre la garniture d'étanchéité (5) et la ligne (2) est remplie d'air et/ou d'un composé de colmatage (7).

5. Garniture d'étanchéité (5) destinée à un ensemble de joint d'étanchéité (1) selon l'une quelconque des revendications 1 à 4 ci-dessus, dans laquelle au moins une lèvre d'étanchéité annulaire (53, 55a, 55b) longe une circonférence intérieure (52) de la garniture d'étanchéité (5), **caractérisée en ce que** la circonférence intérieure d'une ouverture d'extrémité avant (54a) de la garniture d'étanchéité (5) est pourvue d'un biseau (56).

6. Garniture d'étanchéité (5) selon la revendication 5, **caractérisée en ce qu'**une rainure (50c) longeant une circonférence extérieure (50) de la garniture d'étanchéité (5) est constituée sensiblement au même niveau que l'au moins une lèvre d'étanchéité (53, 55a, 55b) dans un sens axial (A) de la garniture d'étanchéité (5).

7. Garniture d'étanchéité (5) selon l'une quelconque des revendications 5 ou 6, **caractérisée en ce qu'**une ouverture d'extrémité arrière (54b) de la garniture d'étanchéité (5) est conçue sous la forme d'un collier d'étanchéité (55b) présentant une face d'extrémité arrière (58b) conduisant à un bord d'étanchéité annulaire (59), dans laquelle un diamètre arrière de l'ouverture d'extrémité arrière (54b) à la hauteur du bord d'étanchéité (59) est plus petit ou, tout au plus, égal à un diamètre de la circonférence intérieure (52) de la garniture d'étanchéité (5) à la hauteur de l'au moins une lèvre d'étanchéité (53, 55a).

8. Garniture d'étanchéité (5) selon l'une quelconque des revendications 5 à 7, **caractérisée en ce qu'**elle comprend au moins une lèvre d'étanchéité (53, 55a, 55b) supplémentaire.

9. Garniture d'étanchéité (5) selon l'une quelconque des revendications 5 à 8, **caractérisée en ce qu'**un bord d'extrémité arrière (50b) de la garniture d'étanchéité (5) conduisant vers la circonférence extérieure (50) de la garniture d'étanchéité (5) est arrondi.

10. Composant électrique comprenant un espace intérieur (100) étanché et une ligne électrique (2) qui s'étend depuis une zone environnante (3) jusque dans l'espace intérieur (100), **caractérisé en ce que** le composant électrique comprend au moins un ensemble de joint d'étanchéité (1) présentant une garniture d'étanchéité (5) selon l'une quelconque des revendications 5 à 9 pour assurer l'étanchéité d'un passage (11) à travers lequel la ligne (2) pénètre dans l'espace intérieur (100) à partir de la zone environnante (3).

11. Procédé permettant d'assurer l'étanchéité entre une ligne électrique (2) et une zone environnante (3), dans lequel la ligne (2) est surmoulée par un composé d'étanchéité (4), une garniture d'étanchéité (5) étant placée autour de la ligne (2) avant le moulage, **caractérisé en ce qu'**une face d'extrémité avant (58a) de la garniture d'étanchéité (5) est alignée avec une surface (40) du composé d'étanchéité (4) dans un sens axial (A) de la ligne (2).

12. Procédé selon la revendication 11, **caractérisé en ce qu'**une chambre (6) située entre la garniture d'étanchéité (5) et la ligne (2) est comprimée au cours du moulage.

13. Procédé selon la revendication 11 ou 12, **caractérisé en ce que** la garniture d'étanchéité (5) et la ligne (2) sont chacune surmoulées, au moins par sections, de manière sensiblement simultanée.
